# EUROPEAN PATENT SPECIFICATION

(11) **EP 1 679 024 B1**
(45) Date of publication and mention of the grant of the patent: **03.02.2010**
(21) Application number: 05111862.8
(22) Date of filing: 08.12.2005
(51) Int. Cl.: A47J 37/07, A47J 37/06

(54) **Cooking apparatus**
Kochgerät
Appareil de cuisson

(30) Priority: 05.01.2005 KR 2005000774
(43) Date of publication of application: 12.07.2006
(73) Proprietor: SAMSUNG ELECTRONICS CO., LTD., Suwon-si, Gyeonggi-do (KR)
(72) Inventor: HAN, Dae-sung, Hwaseong-si, Gyeonggi-do (KR); KANG, Han-seong, Yeongtong-gu, Suwon-si, Gyeonggi-do (KR); KWON, Yong-hyun, Suwon-si, Gyeonggi-do (KR); KIM, Chul, Yongin-si, Gyeonggi-do (KR); SUNG, Han-jun, Yeongtong-gu, Suwon-si, Gyeonggi-do (KR); LEE, Tae-uk, Suwon-si Gyeonggi-do (KR); JANG, Seong-deok, Yeongtong-gu, Suwon-si, Gyeonggi-do (KR)
(74) Representative: Grey, Ian Michael

(56) References cited:
- EP-A- 1 444 934
- DE-A1- 3 138 171
- US-A1- 2004 089 163

## Description

The present invention relates to a cooking apparatus comprising a grill and a cover enclosing the grill having an opening therethrough with a plurality of elements mounted in the opening moveable between a first position in which the plurality of elements close the opening in the cover and a second position in which the opening in the cover is open to allow air to escape from the cooking apparatus. Such a cooking apparatus is known from US 2004/089163 A1.

The term "grilling" refers to a method of broiling meat, fish or other food on a gridiron or directly roasting skewered meats or fish on the fire and can be done with a device using electricity, gas, etc.

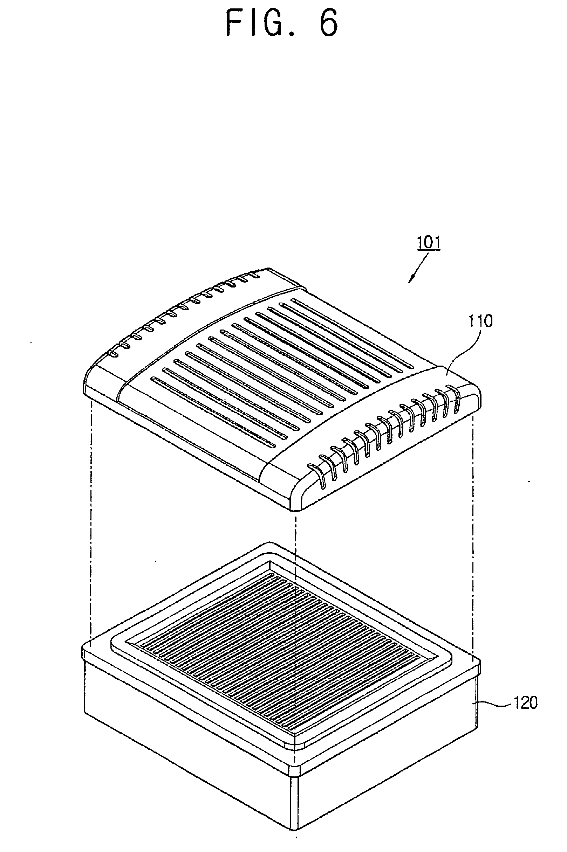

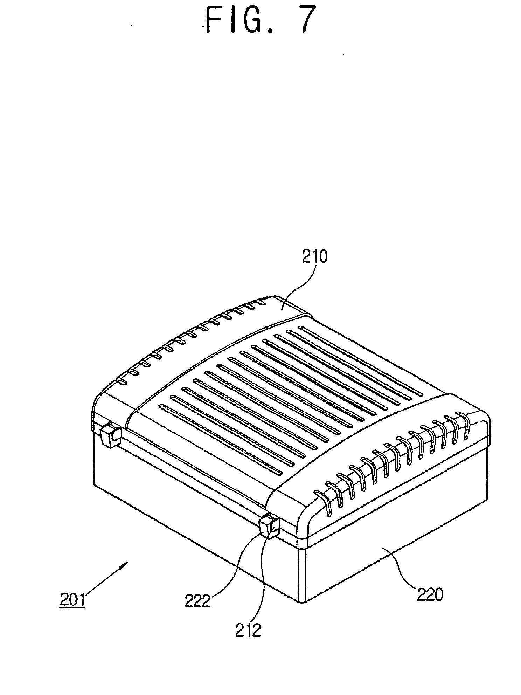

A grill device may often include a grill cover to increase the cooking efficiency which can be opened and closed as necessary. Figure 6 shows a conventional grill device 101 including a grill cover 110 connectable to and disconnectable from a main body 120. Figure 7 shows a conventional grill device 201 including a grill cover 210 having a hinge shaft 212 whereby the grill cover 210 is pivotable relative to a main body 220 which has a hinge shaft receiving part 222.

In the conventional grill device 101 of Figure 6, to discharge hot air within the grill device 101 or to monitor the cooking progress of the food, the grill cover 110 must be completely disconnected and removed from the main body 120. In the case of the conventional grill device 201 of Figure 7, the grill cover 210 must be opened in a pivotal manner. Neither grill cover 110/210 provides a means to discharge the air generated while cooking, out of the main body 120/220 or to determine a state of the food being cooked within the main body 120/220 in an easy manner, without either disconnecting the grill cover 110 from the main body 120 or without pivoting the grill cover 210 from the main body 220 respectively.

Accordingly, it is an object of the present invention to provide a cooking apparatus that substantially alleviates or overcomes the problems mentioned above.

The present invention is **characterised in that** the plurality of elements comprise a plurality of parallel slats pivotally mounted to the cover.

The slats are preferably connected to at least one lever which is operable to move the slats between the first and second positions.

In a preferred embodiment, each slat has a hinge pin extending from each end which is rotatably connected to the cover and about which the slat can pivot and, a lever pin connected to the lever to move each slat between the first and second positions.

A preferred embodiment of the present invention will now be described, by way of example only, with reference to the accompanying drawings, in which:
Figure 1 is an exploded perspective view illustrating a cooking apparatus according to an embodiment of the present invention;
Figure 2 illustrates an opening part of a cover member of the cooking apparatus shown in Figure 1;
Figure 3 illustrates the opening part of the cover member of the cooking apparatus shown in Figure 1, in an opened state;
Figures 4A and 4B are side sectional views schematically illustrating closing and opening operations of a blade of the cover member shown in Figure 1;
Figure 5 is a sectional view schematically illustrating a region on which a coupling part and a rotation supporting part are installed on the cover member shown in Figure 1;
Figure 6 is a perspective view illustrating a conventional grill device having a cover to be disconnected therefrom; and
Figure 7 is a perspective view illustrating the conventional grill device having a cover rotatably mounted thereon.

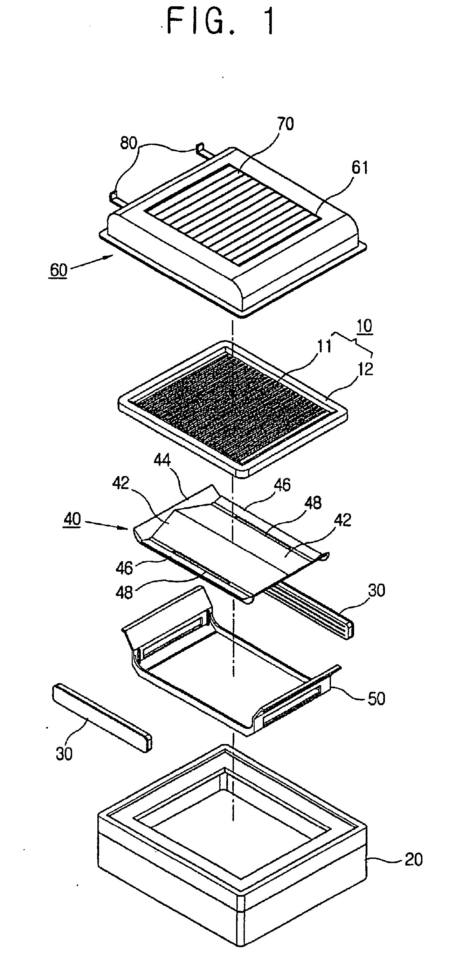

Referring now to Figure 1, a cooking apparatus 1 is shown comprising a grill part 10 on which food is cooked, a grill housing 20 coupled with a lower part of the grill part 10, receiving therein a variety of parts and accessories, and a cover member 60 covering the grill part 10, and having an opening part 61 formed on a top portion thereof.

The grill part 10, which, in use, directly contacts and cooks the food, is coupled with an upper part of the grill housing 20. The grill part 10 comprises a plurality of grill bars 11 disposed at predetermined intervals to allow food to be safely seated thereon, and a support frame 12 supporting the plurality of grill bars 11 around its circumference.

A lower part of the grill part 10 is supported on the grill housing 20 mounted around an upper opening thereof and a heating space is formed inside the opening of the grill housing 20. Electric heaters 30 are provided inside the grill housing 20 as heating sources together with a grill reflecting member 40 for reflecting heat from the electric heaters 30 and an oil collector 50 for collecting oil beneath the grill reflecting member 40.

The electric heaters 30 are installed opposite to each other on side walls inside the grill housing 20 beneath the grill part 10. The heat generated in the electric heaters 30 is transmitted to the grill part 10 by the grill reflecting member 40.

The grill reflecting member 40 is W-shaped in cross-section and is made of metallic material having a good thermal conductivity so as to reflect the heat generated from the electric heaters 30 and then transmit the heat to the grill part 10.

The grill reflecting member 40 comprises a pair of first reflection faces 42 interconnected in a centre of the grill reflecting member 40, auxiliary reflection faces 46 formed adjacent to the first reflection faces 42, and a second reflection face 44 extending from ends of the first reflection faces 42 and the auxiliary reflection faces 46. The first reflection faces 42 are disposed in front of the electric heaters 30 and are angled to reflect the heat generated from the electric heaters 30 to the grill part 10. The auxiliary reflection faces 46 are positioned adjacent to the electric heaters 30 and as such their temperature becomes high while the cooking apparatus 1 is in operation. The auxiliary reflection faces 46 include curved side plate parts on ends thereof which are coupled with the oil collector 50.

An oil guiding hole 48 is formed between each auxiliary reflection face 46 and the respective adjacent first reflection face 42 through which oil coming out of the food being cooked is guided to be collected in the oil collector 50 disposed beneath the grill reflection member 40.

The second reflection face 44 is disposed laterally to the heat emitting direction of the electric heaters 30 and is smoothly curved so as to reflect the heat generated from the electric heaters 30 to the grill part 10.

The cover member 60 for opening and closing the top of the grill part 10 comprises a plurality of blades 70 in the opening part 61 and an angle adjusting part (described in more detail later) connected to the plurality of blades 70 for adjusting the degree of inclination angle of each blade 70 relative to the cover member 60.

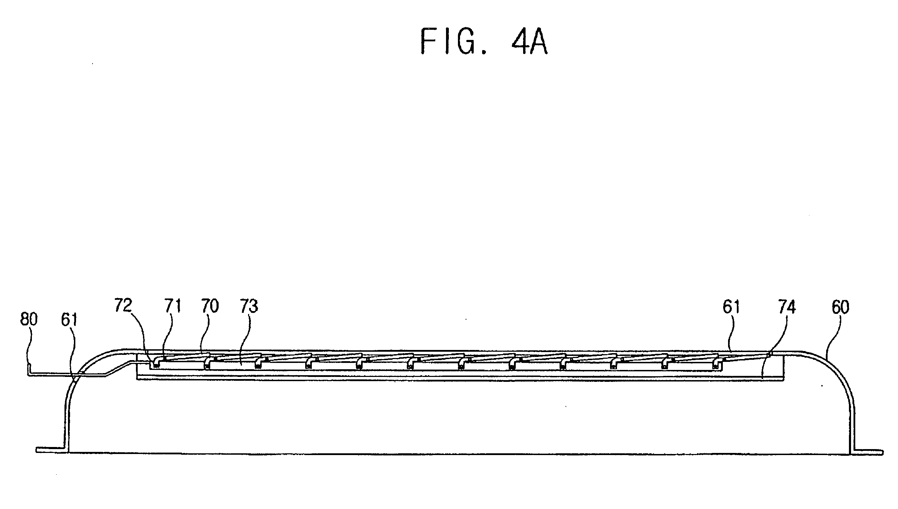

A pair of support frames 74 are provided inside the cover member 60 (Figure 4A) coupled to edges of the opening part 61. End regions of each blade 70 are rotatably coupled with the pair of support frames 74 by rotation supporting parts (to be described later). Each blade 70 is disposed in a direction perpendicular to the electric heaters 30 so that the heat from the electric heaters 30 can be suppressed from being externally discharged from the cover member 60.

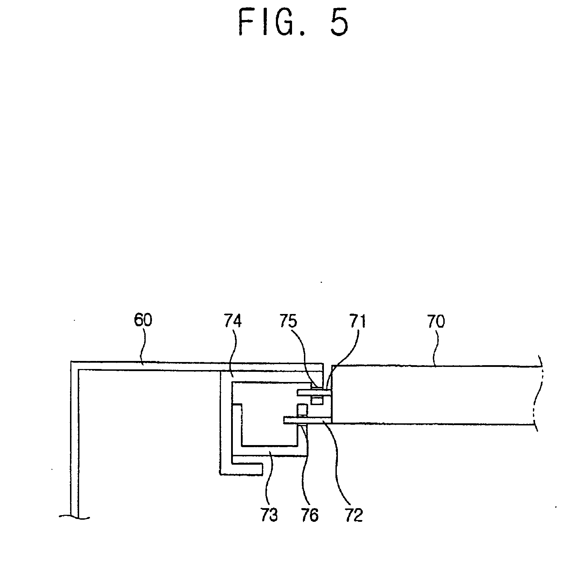

In Figure 5, each rotation supporting part comprises one of a plurality of rotation holes 75 formed along the lengthwise direction of the support frame 74, and a rotation projection 71 provided on each blade, being received rotatably in each rotation hole 75.

The angle adjusting part comprises a pair of sliders 73 slidably mounted to the support frame 74, a coupling part coupling end portions of each blade 70 with the pair of sliders 73, and a manipulation knob 80 formed on each slider 73 to allow the slider 73 to be manually operated. Each manipulation knob 80 extends from the respective slider 73 and extends through the cover member 60 through a opening 61 to the outside thereof.

The coupling part, as shown in FIG. 5, comprises a plurality of coupling holes 76 formed along the length of each slider 73, and a coupling projection 72 provided on each blade, being inserted into a corresponding coupling hole 76.

An opening and closing operation of the blade 70 provided on the cover member of the cooking apparatus is as follows.

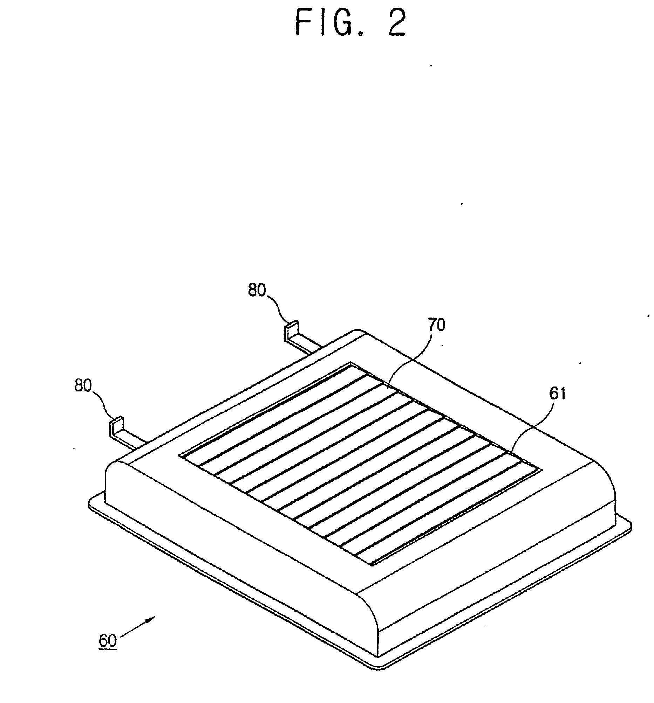

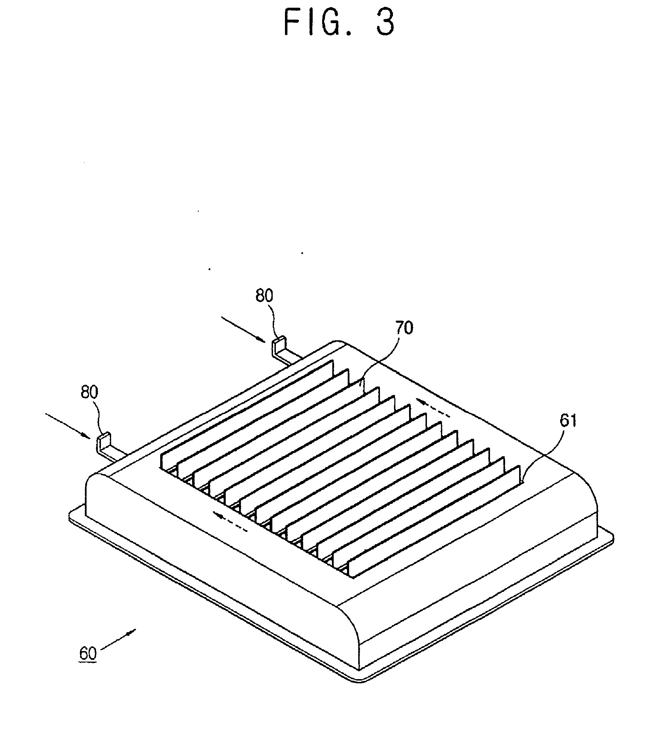

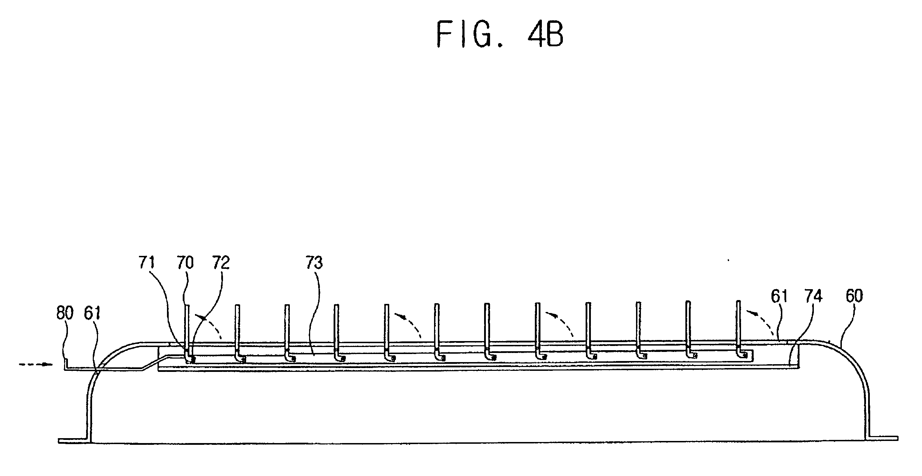

As shown in Figures 2 and 4A, the opening part 61 of the cover member 60 is closed by the plurality of blades 70 when cooking food. However, as shown in Figures 3 and 4B, if each manipulation knob 80 is pushed during the cooking process, the sliders 73 connected to the coupling projections 72 are slid and the blades 70 are thereby rotated about their respective rotation projections 71 and are erected relative to the cover member 60, causing the opening part 61 of the cover member 60 to be opened. Thus, the hot air generated while cooking can be discharged through the opening part 61, and the user can also ascertain a cooking state of the food being cooked by viewing the food through the opening part 61. Conversely, the user can easily rotate the blades 70 to close the opening part 61 by reversing the above-described operation to retain hot air within the cover member 60.

The cooking efficiency and accuracy is therefore improved by the facility to open and close the opening part 61.

Although an embodiment of the present invention has been shown and described, it will be appreciated by those skilled in the art that changes may be made in this embodiment without departing from the principles the invention, the scope of which is defined in the appended claims hereafter.

## Claims

1. A cooking apparatus (1) comprising a grill (10) and a cover (60) enclosing the grill (10) having an opening (61) therethrough with a plurality of elements (70) mounted in the opening (61) moveable between a first position in which the plurality of elements (70) close the opening (61) in the cover (60) and a second position in which the opening (61) in the cover (60) is open to allow air to escape from the cooking apparatus (1) **characterised in that** the plurality of elements comprise a plurality of parallel slats (70) pivotally mounted to the cover (60).

2. A cooking apparatus according to claim 1, wherein the slats (70) are connected to at least one lever (80) which is operable to move the slats (70) between the first and second positions.

3. A cooking apparatus according to claim 2, wherein each slat (70) has a hinge pin (71) extending from each end which is rotatably connected to the cover (60) and about which the slat (70) can pivot and, a lever pin (72) connected to the lever (80) to move each slat (70) between the first and second positions.

## Patentansprüche

1. Kochgerät (1) umfassend einen Grill (10) und eine Abdeckung (60), die den Grill (10) umschließt und eine Öffnung (61) dort hindurch mit einer Vielzahl von Elementen (70) aufweist, die in der Öffnung (61) montiert und zwischen einer ersten Position, in der die Vielzahl von Elementen (70) die Öffnung (61) in der Abdeckung (60) schließen, und einer zweiten Position bewegbar sind, in der die Öffnung (61) in der Abdeckung (60) geöffnet ist, um zu erlauben, dass Luft aus dem Kochgerät (1) entweicht, **dadurch gekennzeichnet, dass** die Vielzahl von Elementen eine Vielzahl von parallelen Lamellen (70) umfassen, die drehbar an der Abdeckung (60) montiert sind.

2. Kochgerät nach Anspruch 1, wobei die Lamellen (70) mit mindestens einem Hebel (80) verbunden sind, der zum Bewegen der Lamellen (70) zwischen der ersten und zweiten Position bedienbar ist.

3. Kochgerät nach Anspruch 2, wobei jede Lamelle (70) einen Scharnierstift (71), der sich von jedem Ende aus erstreckt und der rotierbar mit der Abdeckung (60) verbunden ist und um den die Lamelle (70) sich drehen kann, und einen Scharnierstift (72) aufweist, der mit dem Hebel (80) verbunden ist, um jede Lamelle (70) zwischen der ersten und zweiten Position zu bewegen.

## Revendications

1. Appareil de cuisson (1) comprenant un gril (10) et un couvercle (60) fermant le gril (10) ayant une ouverture (61) à travers celui-ci avec une pluralité d'éléments (70) montés dans l'ouverture (61) mobiles entre une première position dans laquelle la pluralité d'éléments (70) ferme l'ouverture (61) dans le couvercle (60) et une seconde position dans laquelle l'ouverture (61) dans le couvercle (60) est ouverte pour laisser l'air s'échapper de l'appareil de cuisson (1), **caractérisé en ce que** la pluralité d'éléments comprend une pluralité de lamelles parallèles (70) montées de façon apte à pivoter sur le couvercle (60).

2. Appareil de cuisson selon la revendication 1, dans lequel les lamelles (70) sont reliées à au moins un levier (80) qui est utilisable pour faire passer les lamelles (70) entre les première et seconde positions.

3. Appareil de cuisson selon la revendication 2, dans lequel chaque lamelle (70) a un axe de charnière (71) s'étendant à partir de chaque extrémité qui est relié de façon apte à tourner au couvercle (60) et autour duquel la lamelle (70) peut pivoter et un axe de levier (72) relié au levier (80) pour faire passer chaque lamelle (70) entre les première et seconde positions.
